# EUROPÄISCHE PATENTSCHRIFT

(11) **EP 0 624 735 B1**
(45) Veröffentlichungstag und Bekanntmachung des Hinweises auf die Patenterteilung: **25.09.1996**
(21) Anmeldenummer: 94104037.0
(22) Anmeldetag: 16.03.1994
(51) Int. Cl.: F16D 69/04

(54) **Bremsbelag für Scheibenbremsen, insbesondere für Hochgeschwindigkeitszüge**
Brake lining for disc brakes, particularly for high speed trains
Garniture de frein pour freins à disque, notamment pour trains à grande vitesse

(30) Priorität: 08.05.1993 DE 9307017 U
(43) Veröffentlichungstag der Anmeldung: 17.11.1994
(73) Patentinhaber: AlliedSignal Bremsbelag GmbH, 21509 Glinde (DE)
(72) Erfinder: Bergmeier, Manfred, D-32584 Löhne (DE); Valentin, Wolfgang, Dipl.-Ing., D-21509 Glinde (DE)
(74) Vertreter: Richter, Werdermann & Gerbaulet

(56) Entgegenhaltungen:
- DE-U- 8 514 607
- DE-U- 9 307 017

## Beschreibung

Die Erfindung betrifft einen Bremsbelag für Scheibenbremsen, insbesondere für Hochgeschwindigkeitsschienenfahrzeuge, mit einer ein- oder mehrteiligen Trägerplatte mit einer rückseitigen Befestigung oder Führung für den Bremsbelag und einem auf der Vorderseite der Trägerplatte in einem Abstand von dieser mittels Abstandshalter und Befestigungsmittel gehaltenen Halteblech mit einer Anzahl von ersten Durchbrechungen zur Aufnahme einzelner Bremselemente, von denen jedes einzelne Bremselement aus einem Reibwerkstofformkörper oder aus einem den Reibwerkstofformkörper mantelförmig umgebenden, obenseitig offenen, metallischen Korb besteht, dessen Bodenplatte gegenüber der Korbwand seitlich auskragend ist und einen gegenüber dem Durchmesser einer jeden Durchbrechung größeren Durchmesser aufweist, wobei jeder Bremselementkorb derart durch die erste Durchbrechung des Halteblechs hindurchgesteckt ist, daß der äußere umlaufende Bereich der Korbbodenplatte an der der Trägerplatte zugekehrten Wandfläche des Haltebleches zur Anlage kommt, wobei der Bremselementkorb mittels einer sich auf der Trägerplatte abstützenden Tellerfeder in Anlageposition gehalten ist.

Bremsbeläge in den verschiedensten Ausführungsformen sind bekannt. So beschreibt die DE-U1-8 514 607.2 eine Teilbelagscheibenbremse, bei der die Trägerplatte eine Anzahl von Durchbrechungen aufweist, durch die Bremselementfortsätze durchgreifen, wobei diese Fortsätze mit einer Tragscheibe verbunden sind, deren Durchmesser größer ist als der Durchmesser der Durchbrechungen. Über eine Tellerfeder, die sich gegen eine Trag- und Führungsplatte abstützt, werden die Bodenplatten gegen die Tragplattenunterseite gedrückt. Die Trägerplatte sowie die Trag- und Führungsplatte werden durch Nieten mit entsprechend hierum angeordneten Abstandsringen abstandsveränderbar gehalten. Um verbrauchte und nicht mehr funktionsfähige Bremselemente gegen neue Bremselemente in dem Bremsbelag auszutauschen, ist es erforderlich, das die Bremselemente tragende Halteblech von der Trägerplatte zu trennen. Da jedoch das Halteblech mit der Trägerplatte über Nietverbindungen verbunden ist, ist ein Lösen des Haltebleches von der Trägerplatte mit einem hohen Arbeits- und Kostenaufwand verbunden, da die Nietverbindungen durch Herausschlagen der Niete oder durch Anbringung entsprechender Durchbohrungen entfernt werden müssen. Nach dem Auswechseln der verbrauchten Bremselemente gegen neue Bremselemente müssen dann das Halteblech und die Trägerplatte wieder über Nietverbindungen miteinander verbunden werden. Da das Lösen der Nietverbindungen aufwendig und mit hohen Kosten verbunden ist, werden die Teile des Bremsbelages nicht mehr wiederverwendet, sondern der gesamte Bremsbelag mit den abgenutzten Bremselementen wird einer anderweitigen Verwertung zugeführt. Es ist daher erforderlich, daß die gesamte Einheit, bestehend aus Trägerplatte, Halteblech und Bremselementen jeweils neu eingesetzt wird, wenn die Bremselemente eines Bremsbelages abgenutzt sind.

Es ist daher Aufgabe der vorliegenden Erfindung, einen Bremsbelag der eingangs genannten Art dahingehend zu verbessern, daß eine bessere Wärmeverteilung und Kühlung erreicht wird, daß seine Teile, wie Trägerplatte und Halteblech, bei einer Erneuerung der Bremselemente ohne hohen Kosten- und Zeitaufwand wiederverwendbar sind, so daß eine hohe Wirtschaftlichkeit gegeben ist und Kosten für eine Wiederaufbereitung entfallen, und daß sich die Bremselemente dem abzubremsenden Teil besser anpassen.

Diese Aufgabe wird durch die in den Ansprüchen 1 und 2 angegebenen Merkmale gelöst.

Aufgrund der erfindungsgemäßen Ausgestaltung wird die Verbindung zwischen dem Halteblech und der Trägerplatte bevorzugterweise vermittels Zapfen oder Bolzen hergestellt, die zwischen dem Halteblech und der Trägerplatte Abstandsringe bzw. Abstandsbuchsen zur Abstandshaltung des Haltebleches von der Trägerplatte tragen. Zur Arretierung des Haltebleches mit den Bremselementen auf der Trägerplatte werden die Zapfen oder Bolzen im Bereich ihres aus dem Halteblech herausgeführten Endes verriegelt. Für diese Verriegelung sind bevorzugterweise Verriegelungsbolzen oder -splinte vorgesehen, die in parallel zu dem Halteblech verlaufenden Durchbohrungen in den aus dem Halteblech herausragenden Abschnitten der Verriegelungsbolzen oder -splinte gehalten werden, so daß eine feste Verbindung zwischen dem Halteblech und der Trägerplatte erhalten wird. Dadurch, daß die die Trägerplatte und das Halteblech miteinander verbindenden Zapfen oder Bolzen einendseitig an der Trägerplatte bevorzugterweise vermittels einer Schweißverbindung fest verbunden sind, erfolgt über diese Zapfen oder Bolzen eine kraftschlüssige Verbindung zwischen dem Halteblech und der Trägerplatte, wobei das Halteblech zum Auswechseln verbrauchter Bremselemente durch Lösen der Verriegelungsbolzen oder -splinte von der Trägerplatte gelöst werden kann, was keinen hohen Arbeitsaufwand erfordert. Dadurch, daß die Verriegelungsbolzen oder -splinte mit der Trägerplatte verschweißt sind, übernehmen die Verriegelungsbolzen oder -splinte die Funktion der sonst üblicherweise verwendeten Nieten, jedoch mit dem Vorteil eines schnellen Lösens des Haltebleches von der Trägerplatte. Durch die lösbare Verbindung zwischen dem Halteblech und der Trägerplatte sind diese beiden, den Bremsbelag bildenden Teile beim Auswechseln der Bremselemente immer wieder verwendbar. Nach einer weiteren Lösung werden als Verriegelungseinrichtung für die Zapfen oder Bolzen Sprengringe oder Federringe verwendet.

Mit dem erfindungsgemäß ausgebildeten Bremsbelag wird durch die Einzelaufhängung und Abfederung der einzelnen Bremselemente eine hohe Anpassungsfähigkeit an die abzubremsenden Teile erreicht. Durch die bessere Wärmeverteilung und -ableitung werden Brandflecken und Anlaufzonen, die somit aufgrund einer hohen Hitzeentwicklung entstehen, vermieden. Des weiteren ermöglicht die Einzelanordnung und -aufhängung der Bremselemente eine bessere Kühlung und eine gute Luftdurchströmung.

Vorteilhafte Ausgestaltungen der Erfindung sind in den Unteransprüchen gekennzeichnet.

Ausführungsbeispiele der Erfindung werden nachstehend anhand der Zeichnungen näher erläutert. Es zeigen
Fig. 1 in einer Draufsicht das mehrere Bremselemente tragende Halteblech eines Bremsbelages,
Fig. 2 den Bremsbelag in einer Seitenansicht,
Fig. 3 eine vergrößerte Teilansicht, zum Teil im Schnitt des Bremsbelages mit einem das Halteblech mit der Trägerplatte verbindenden Verriegelungbolzen,
Fig. 4 eine vergrößerte Seitenansicht einer Ausführungsform eines Verriegelungsbolzens und
Fig. 5 eine vergrößerte Seitenansicht einer weiteren Ausführungsform des Verriegelungsbolzens.

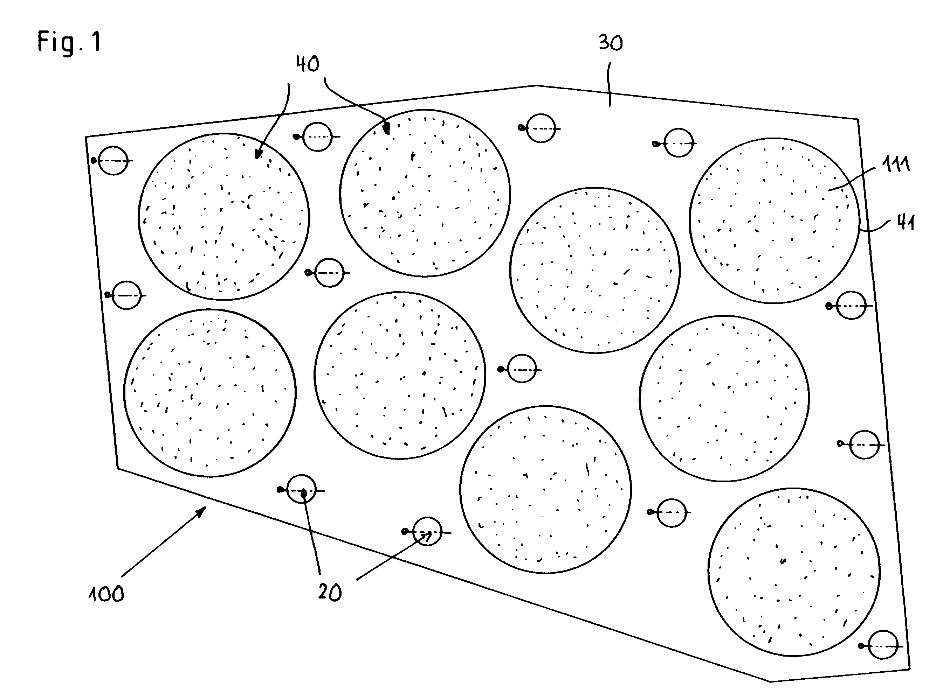

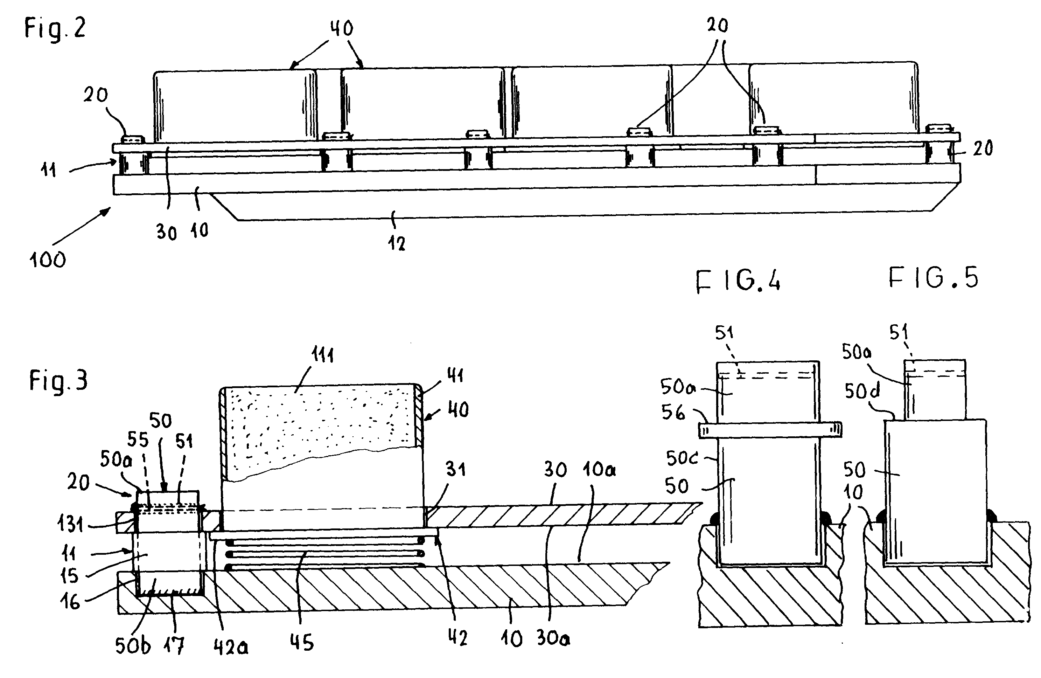

Der in den Fig. 1 und 2 dargestellte Bremsbelag 100 für Scheibenbremsen, insbesondere für Hochgeschwindigkeitsschienenfahrzeuge, besteht aus einer Trägerplatte 10 mit einer rückseitigen Befestigung oder Führung 12 zur Befestigung des Bremsbelages an einem in der Zeichnung nicht dargestellten Bremsbackenhalter, wobei diese Befestigung oder Führung 12 eine schwalbenschwanzartige Ausgestaltung aufweisen kann. Auf der Vorderseite der Trägerplatte 10 ist in einem Abstand von dieser mittels Abstandshalter 11 und Befestigungsmittel 20 ein Halteblech 30 angeordnet. Die Trägerplatte 10 und das Halteblech 30 weisen gleiche, miteinander sich deckende Plattenzuschnitte auf.

Das Halteblech 30, das aus Stahl, insbesondere korrosionsbeständigem Stahl, oder aus einem Leichtmetall zur Gewichtsersparnis, bestehen kann, ist mit einer Anzahl von Durchbrechungen 31 zur Aufnahme einzelner Bremselemente 40 versehen. Bei dem in Fig. 1 gezeigten Ausführungsbeispiel trägt das Halteblech 30 neun Bremselemente 40. Jedes Bremselement 40 besteht aus einem Reibwerkstofformkörper 111 oder aus einem den Reibwerkstofformkörper mantelförmig umgebenden, obenseitig offenen, metallischen Korb 41, der bodenseitig mittels einer Bodenplatte 42 verschlossen ist, deren Durchmesser gegenüber dem Korb 41 größer ist, so daß ein seitlich auskragender, umlaufender Plattenabschnitt 42a erhalten wird (Fig.3). Der Reibwerkstofformkörper 111 bzw. der Korb 41 weisen einen kreisförmigen Querschnitt auf. Der Durchmesser einer jeden Durchbrechung 31 in dem Halteblech 30 ist gegenüber dem Durchmesser des Reibwerkstofformkörpers bzw. des Korbes 41 etwas größer bemessen, so daß von unten her der Korb 41 durch die Durchbrechung 31 in dem Halteblech 30 hindurchgesteckt werden kann, wobei jedoch der Durchmesser der Durchbrechung 31 gegenüber dem Durchmesser der Bodenplatte 42 des Korbes 41 kleiner ist, so daß im eingesetzten Zustand die Bodenplatte 42 an der der Trägerplatte 10 zugekehrten Wandfläche 30a des Halteblechs 30 zur Anlage kommt. Die Anzahl der an dem Halteblech 30 gehaltenen Reibwerkstofformkörper 111 bzw. der Körbe 41 mit den Reibwerkstofformkörpern kann beliebig gewählt sein. Die Anzahl richtet sich jeweils nach der Größe des Haltebleches 30 bzw. danach, ob der Bremsbelag eine ein- oder mehrteilige Trägerplatte aufweist. Gegenüber der verwendeten Kreisform für die Durchbrechungen 31 in dem Halteblech 30 können auch Durchbrechungen vorgesehen sein, die eine andere geometrische Form aufweisen. Die Reibwerkstofformkörper 111 bzw. die Körbe 41 weisen dann eine der Form der Durchbrechungen 31 entsprechende Querschnittsform auf.

Die Halterung der einzelnen Körbe 41 in dem Halteblech 30 erfolgt mittels Tellerfedern 45 oder anderen geeigneten Mitteln, die sich einendseitig auf der dem Halteblech 30 zugekehrten Wandfläche 10a der Trägerplatte 10 abstützen und die die Unterseite der Bodenplatte 42 des Korbes 41 so beaufschlagen, daß die Bodenplatte 42 mit ihrem umlaufenden Randabschnitt 42a an der Wandfläche 30a des Haltebleches 30 zu liegen kommt (Fig.3). Eine Federbeaufschlagung der einzelnen Bremselemente 40 kann auch entfallen. In diesem Falle sind die Bodenplatten 42 der Körbe 41 an dem Halteblech 30 vermittels einer Schweißverbindung oder einer anderen geeigneten Verbindung befestigt.

Die Befestigung des Haltebleches 30 an der Trägerplatte 10 in einem Abstand erfolgt mittels der Befestigungsmittel 20 und Abstandshalter 11. Jedes Befestigungsmittel 20 besteht aus einem an der dem Halteblech 30 zugekehrten Wandfläche 10a der Trägerplatte 10 befestigten und durch eine in dem Halteblech 30 ausgebildeten Durchbrechung 131 hindurchgeführten Zapfen oder Bolzen 50. Die Anzahl der in dem Halteblech 30 ausgebildeten Durchbrechungen 131 für diese Halte- und Verbindungsbolzen 50 richtet sich jeweils nach der Anzahl der erforderlichen Verbindungsstellen, wobei es vorteilhaft ist, wenn diese Verbindungsstellen über die gesamte Fläche des Haltebleches 30 zwischen den Bremselementen 40 angeordnet sind.

Jeder Bolzen 50 ist mit seinem bodenseitigen Ende 50b mit der Trägerplatte 10 fest verbunden. Bevorzugterweise weist im Verbindungsbereich die Trägerplatte 10 eine Ausnehmung bzw. Bohrung 16 zur Aufnahme des Endes 50b des Bolzens 50 auf. Zweckmäßigerweise ist der Bolzen 50 mit der Trägerplatte 10 verschweißt und somit integrierter Bestandteil der Trägerplatte 10. Zur Abstandshalterung des Haltebleches 30 zur Trägerplatte 10 ist auf den Bolzen 50 bei der in Fig. 3 gezeigten Ausführungsform ein Distanzring oder -hülse 15 aufgeschoben, über die der Abstand zwischen dem Halteblech 30 und der Trägerplatte 10 gehalten wird.

Der Bolzen 50 weist eine Länge auf, aufgrund der der Bolzen 50 mit einem Abschnitt 50a aus der Durchbrechung 131 in dem Halteblech 30 herausgeführt ist. Dieser obere Abschnitt 50a des Bolzens 50 weist eine parallel zu dem Halteblech 30 verlaufende Durchbohrung 51 zur Aufnahme eines Verriegelungsbolzens oder -splints 55 auf, wobei dieser Verriegelungsbolzen oder -splint 55 derart oberhalb des Haltebleches 30 durch den Bolzen 50 hindurchgeführt ist, daß das Halteblech 30 an der Trägerplatte 10 mittels Klemmsitz gehalten ist. Der Abstand zwischen dem oberen Rand des Distanzringes oder -hülse 15 zur Durchbohrung 51 in dem Bolzen 50 entspricht der Stärke des Haltebleches 30, so daß nach dem Einführen des Verriegelungsbolzens oder -splints 55 in die Durchbohrung 51 ein fester Sitz des Haltebleches 30 an der Trägerplatte 10 gewährleistet ist. Anstelle eines Verriegelungsbolzens oder -splints 55 können zur Sicherung auch Sprengringe oder Federringe eingesetzt werden.

Es besteht jedoch auch die Möglichkeit, das obere freie Ende bzw. den aus dem Halteblech 30 herausragenden Abschnitt 50a des Bolzens 50 mit mehreren übereinanderliegenden Durchbohrungen 51 zu versehen, so daß in Abhängigkeit von der jeweils gewünschten Größe des Abstandes zwischen dem Halteblech und der Trägerplatte eine entsprechende Sicherung und Halterung des Haltebleches 30 an der Trägerplatte 10 erreicht werden kann.

Anstelle eines Distanzringes oder -hülse 15 kann zur Abstandshaltung des Haltebleches 30 zu der Trägerplatte 10 der Bolzen 50 mit zusätzlichen Einrichtungen versehen sein, auf denen sich in einem vorgegebenen Abstand dann das Halteblech 30 abstützt. Nach Fig.4 trägt der Bolzen 50 an seinem oberen, die Durchbohrung 51 für den Verriegelungsbolzen oder -splint 55 aufweisenden Ende 50a unterhalb der Durchbohrung 51 einen seitlich aus der Wandfläche 50c des Bolzens 50 auskragenden, mit dem Bolzen fest verbundenen Ring 56, der in einem Abstand von der Durchbohrung 51 angeordnet ist, der der Stärke des Haltebleches 30 entspricht (Fig.4).

Der Bolzen 50 kann jedoch auch nach einer weiteren Ausführungsform gemäß Fig. 5 an seinem oberen, die Durchbohrung 51 für den Verriegelungsbolzen oder -splint 55 aufweisenden Ende 50a unter Ausbildung einer unterhalb der Durchbohrung 51 umlaufenden, ringförmigen Abstützfläche 50d halsartig eingezogen sein, die in einem Abstand von der Durchbohrung 51 angeordnet ist, der der Stärke des Haltebleches 30 entspricht.

Sowohl das Halteblech 30 als auch die Trägerplatte 10 bestehen aus metallischen Werkstoffen. Die Stärke des Haltebleches 30 und der Trägerplatte 10 richten sich jeweils nach den Einsatzerfordernissen.

Als Zapfen oder Bolzen 50 können auch andersartig ausgebildete Befestigungsmittel eingesetzt werden, wie zum Beispiel bajonettverschlußartige Verbindungsmittel, Schraubverbindungen; auch eine Verklebung oder Vernietung kann vorgenommen werden, wobei zweckmäßigerweise ein leichtes Lösen der Befestigungs- und Verbindungsmittel oder -einrichtungen gewährleistet sein sollte.

## Patentansprüche

1. Bremsbelag für Scheibenbremsen, insbesondere für Hochgeschwindigkeitsschienenfahrzeuge, mit einer ein- oder mehrteiligen Trägerplatte (10) mit einer rückseitigen Befestigung oder Führung (12) für den Bremsbelag und einem auf der Vorderseite der Trägerplatte (10) in einem Abstand von dieser mittels Abstandshalter (11) und Befestigungsmittel (20) gehaltenen Halteblech (30) mit einer Anzahl von ersten Durchbrechungen (31) zur Aufnahme einzelner Bremselemente (40), von denen jedes einzelne Bremselement aus einem Reibwerkstofformkörper oder aus einem den Reibwerkstofformkörper mantelförmig umgebenden, obenseitig offenen, metallischen Korb (41) besteht, dessen Bodenplatte (42) gegenüber der Korbwand (43) seitlich auskragend ist und einen gegenüber dem Durchmesser einer jeden ersten Durchbrechung (31) größeren Durchmesser aufweist, wobei jeder Bremselementkorb (41) derart durch die erste Durchbrechung (31) des Haltebleches (30) hindurchgesteckt ist, daß der äußere umlaufende Bereich (42a) der Korbbodenplatte (42) an der der Trägerplatte (10) zugekehrten Wandfläche (30a) des Haltebleches (30) zur Anlage kommt, wobei der Bremselementkorb (41) mittels einer sich auf der Trägerplatte (10) abstützenden Tellerfeder (45) in Anlageposition gehalten ist, dadurch gekennzeichnet, daß jedes Befestigungsmittel (20) aus einem an der dem Halteblech (30) zugekehrten Wandfläche (10a) der Trägerplatte (10) befestigten und durch eine in dem Halteblech (30) ausgebildeten zweiten Durchbrechung (131) hindurchgeführten Zapfen oder Bolzen (50) besteht, dessen aus dem Halteblech (30) herausragender Abschnitt (50a) mit einer parallel zu dem Halteblech (30) verlaufenden Durchbohrung (51) zur Aufnahme eines Verriegelungsbolzens oder -splints (55) als Verriegelungseinrichtung versehen ist, wobei der Verriegelungsbolzen oder -splint (55) derart oberhalb des Haltebleches (30) durch den Zapfen oder Bolzen (50) hindurchgeführt ist, daß das Halteblech (30) an der Trägerplatte (10) durch die sich einendseitig an der Trägerplatte (10) und an den Bremselementenkörben (41) abstützenden Tellerfedern (45) und der damit verbundenen Abstützung des Haltebleches (30) an den Verriegelungsbolzen oder -splint (55) mittels Klemmsitz gehalten ist.

2. Bremsbelag für Scheibenbremsen, insbesondere für Hochgeschwindigkeitsschienenfahrzeuge, mit einer ein- oder mehrteiligen Trägerplatte (10) mit einer rückseitigen Befestigung oder Führung (12) für den Bremsbelag und einem auf der Vorderseite der Trägerplatte (10) in einem Abstand von dieser mittels Abstandshalter (11) und Befestigungsmittel (20) gehaltenen Halteblech (30) mit einer Anzahl von ersten Durchbrechungen (31) zur Aufnahme einzelner Bremselemente (40), von denen jedes einzelne Bremselement aus einem Reibwerkstofformkörper oder aus einem den Reibwerkstofformkörper mantelförmig umgebenden, obenseitig offenen, metallischen Korb (41) besteht, dessen Bodenplatte (42) gegenüber der Korbwand (43) seitlich auskragend ist und einen gegenüber dem Durchmesser einer jeden ersten Durchbrechung (31) größeren Durchmesser aufweist, wobei jeder Bremselementkorb (41) derart durch die erste Durchbrechung (31) des Haltebleches (30) hindurchgesteckt ist, daß der äußere umlaufende Bereich (42a) der Korbbodenplatte (42) an der der Trägerplatte (10) zugekehrten Wandfläche (30a) des Haltebleches (30) zur Anlage kommt, wobei der Bremselementkorb (41) mittels einer sich auf der Trägerplatte (10) abstützenden Tellerfeder (45) in Anlageposition gehalten ist, dadurch gekennzeichnet, daß jedes Befestigungsmittel (20) aus einem an der dem Halteblech (30) zugekehrten Wandfläche (10a) der Trägerplatte (10) befestigten und durch eine in dem Halteblech (30) ausgebildeten zweiten Durchbrechung (131) hindurchgeführten Zapfen oder Bolzen (50) besteht, dessen aus dem Halteblech (30) herausragender Abschnitt (50a) mittels eines Sprengringes oder Federringes als Verriegelungseinrichtung verriegelt ist, wobei der Sprengring oder Federring derart oberhalb des Haltebleches (30) angeordnet ist, daß das Halteblech (30) an der Trägerplatte (10) durch die sich einendseitig an der Trägerplatte (10) und an den Bremselementenkörben (41) abstützenden Tellerfedern (45) und der damit verbundenen Abstützung des Haltebleches (30) an dem Sprengring oder Federring mittels Klemmsitz gehalten ist.

3. Bremsbelag nach Anspruch 1, dadurch gekennzeichnet, daß der Zapfen oder Bolzen (50) an seinem oberen, die Durchbohrung (51) für den Verriegelungsbolzen oder -splint (55) aufweisenden Ende (50a) unterhalb der Durchbohrung (51) einen seitlich aus der Wandfläche (50a) auskragenden, mit dem Zapfen oder Bolzen (50) fest verbundenen Ring (56) trägt, der in einem Abstand von der Durchbohrung (51) angeordnet ist, der der Stärke des Haltebleches (30) entspricht.

4. Bremsbelag nach Anspruch 1, dadurch gekennzeichnet, daß der Zapfen oder Bolzen (50) an seinem oberen, die Durchbohrung (51) für den Verriegelungsbolzen oder -splint (55) aufweisenden Ende (50a) unter Ausbildung einer unterhalb der Durchbohrung (51) umlaufenden, ringförmigen Abstützfläche (50d) halsartig eingezogen ist, die in einem Abstand von der Durchbohrung (51) angeordnet ist, der der Stärke des Haltebleches (30) entspricht.

5. Bremsbelag nach einem der Ansprüche 1 bis 3, dadurch gekennzeichnet, daß der Zapfen oder Bolzen (50) mit seinem der Trägerplatte (10) zugekehrten Ende (50b) in eine in der Trägerplatte (10) ausgebildete Bohrung (16) eingesetzt und mit der Trägerplatte (10) vermittels einer Schweißverbindung (17) fest verbunden ist.

6. Bremsbelag nach einem der Ansprüche 1 bis 5, dadurch gekennzeichnet, daß auf den Zapfen oder Bolzen (50) ein den Abstand zwischen dem Halteblech (30) und der Trägerplatte (10) haltender Distanzring oder -hülse (15) aufgeschoben ist.

## Claims

1. Brake lining for disk brakes, particularly for high speed trains with a one-piece or multipart supporting plate (10) having an attachment device or guiding means (12) on the rear for the brake lining and a retaining plate (30) mainteined at a distance on the front of the supporting plate (10) from the same with the aid of spacers (11) and fastening means (20) possessing a plurality of first perforations (31) for the accommodation of individual brake elements being comprised of a shaped friction material member or of a metallic basket (41) surrounding the shaped friction material member in a casing-like fashion and open at the top, whose bottom plate (42), in comparison with the basket wall (43), projects laterally and possesses a larger diameter in comparison with the diameter of each first perforation (31), in which case each brake element basket (41) is passed through the first perforation (31) of the retaining plate (30) in such a way that the external circumferential area (42a) comes to bear against the wall area (30a) facing the supporting plate (10), while the brake element basket (41) is maintained in the bearing position with the aid of a cup spring (45) resting on the supporting plate (10),
characterized in that
each fastening means (20) is comprised of a stud or pin (50) fixed to the wall area (10a) facing the retaining plate (30) of the supporting plate (10) and passed through a second perforation (131) formed in the retaining plate (30), whose section (50a) projecting from the retaining plate (30) is provided with a through bore (51) proceeding parallellly to the retaining plate (30) for the accommodation of a lockbolt or split pin (55) in the form of a locking means, in which case the lockbolt or split pin (55) is passed through the stud or pin (50) above the retaining plate (30) in such a way that the retaining plate (30) is retained on the supporting plate (10) by means of the cup springs (45) that rest with one end on the supporting plate (10) and on the brake element baskets (41) and the supporting of the retaining plate (30) connected with this on the lockbolts or split pins (55) by means of press fit.

2. Brake lining for disk brakes, particularly for high speed trains, with a one-piece or multipart supporting plate (10) having an attachment device or guiding means (12) on the rear for the brake lining and a retaining plate (30) maintained at a distance on the front of the supporting plate (10) from the same with the aid of spacers (11) and fastening means (20) possessing a plurality of first perforations (31) for the accommodation of individual brake elements (40), each of said individual brake emements being comprised of a shaped friction material member or of a metallic basket (41) surrounding the shaped friction material member in a casing-like fashion while open at the top, whose bottom plate (42), in comparison with the basket wall (43), projects laterally and possesses a larger diameter in comparision with the diameter of each first perforation (31), in which case each brake element basket (41) is passed through the first perforation (31) of the retaining plate (30) in such a way that the external circumferential area (42a) of the basket bottom plate (42) comes toO bear against the wall area (30a) facing the supporting plate (10), while the brake element basket (41) is maintained in the bearing position with the aid of a cup spring (45) resting on the supporting plate (10),
characterized in that
each fastening means (20) is comprised of a stud or pin (50) fixed to the wall area (10a) facing the retaining plate (30) of the supporting plate (10) and passed through a second perforation (131) formed in the retaining plate (30), whose section (50a) projecting from the the retaining plate (30) is locked with the aid of a snap ring or spring ring in the form of a locking means, in which case the snap ring or spring ring is disposed above the the retaining plate (30) in such a way that the retaining plate (30) is retained on the supporting plate (10) by means of the cup springs (45) resting with one end on the supporting plate (10) and on the brake element baskets (41) and the supporting of the retaining plate (30) connected herewith on the snap ring or spring ring with the aid of press fit.

3. Brake lining according to Claim 1,
characterized in that
the stud or pin (50), on its upper end (50a) possessing the through bore (51) for the lockbolt or split pin (55), below the through bore (51), carries a ring (56) laterally projecting from the wall area (50a) which is rigidly connected to the stud or pin, which is disposed at a distance from the through bore (51) which corresponds to the thickness of the retaining plate (30).

4. Brake lining according to Claim 1,
characterized in that
the stud or pin (50), on its upper end (50a) possessing the through bore (51) for the lockbolt or split pin (55), is constricted in a neck-like fashion while forming an annular supporting area (50d) circumferentially below the through bore (51), which is disposed at a distance from the through bore (51), which corresponds to the thickness of the retaining plate (30).

5. Brake lining according to any of Claims 1 to 3,
characterized in that
the stud or pin (50), with its end (50b) facing the supporting plate (10), is inserted into a drilled hole (16) formed in the supporting plate (10) and is rigidly connected to the supporting plate (10) with the aid of a weld joint (17).

6. Brake lining according to any of Claims 1 to 5,
characterized in that,
on to the stud or pin (50), a spacer ring or spacer sleeve (15) is slipped for maintaining the distance between the retaining plate (30) and the supporting plate (10).

## Revendications

1. Garniture de frein pour freins à disque, en particulier pour trains à grande vitesse, avec une plaque de support (10) en une ou plusieurs parties avec une fixation ou un guidage (12) situé à l'arrière pour la garniture de frein et une tôle de retenue (30) maintenue sur la face avant de la plaque de support (10) à un certain écart de celle-ci au moyen d'un écarteur (11) et de moyens de fixation (20) avec un certain nombre de premières découpures (31) pour le logement de différents éléments de freinage (40), parmi lesquels chaque élément de freinage individuel est composé d'un corps moulé en matériau de frottement ou d'une cage métallique (41) ouverte sur le haut, qui entoure le corps moulé en matériau de frottement en forme d'enveloppe, cage dont la plaque de fond (42) fait saillie latéralement par rapport à la paroi de la cage (43) et présente un diamètre qui est supérieur au diamètre de chaque première découpure (31), chaque cage (41) d'élément de freinage traversant la première découpure (31) de la tôle de retenue (30) de telle manière que la zone périphérique extérieure (42a) de la plaque de fond de la cage (42) vient s'appuyer sur la surface de paroi (30a) de la tôle de retenue (30) qui est tournée vers la plaque de support (10), la cage (41) de l'élément de freinage étant maintenue en position d'appui au moyen d'un ressort à disques (45) qui s'appuie sur la plaque de support (10), caractérisée en ce que chaque moyen de fixation (20) est constitué par un tourillon ou un boulon (50) fixé sur la face de paroi (10a) de la plaque de support (10) qui est tournée vers la tôle de retenue (30) et qui passe par une seconde découpure (131) configurée dans la tôle de retenue (30), tourillon dont la section (50a) qui fait saillie de la tôle de retenue (30) est pourvue d'une forure (51) parallèle à la tôle de retenue (30) pour loger un boulon ou une goupille fendue de verrouillage (55) comme dispositif de verrouillage, le boulon ou la goupille fendue de verrouillage (55) traversant le tourillon ou le boulon (50) au-dessus de la tôle de retenue (30) de telle manière que la tôle de retenue (30) est maintenue sur la plaque de support (10) par les ressorts à disques (45) qui s'appuient à une extrémité sur la plaque de support (10) et les cages d'éléments de freinage (41) et sur l'appui ainsi relié de la tôle de retenue (30) sur le boulon ou la goupille fendue de verrouillage (55) par ajustement pressé.

2. Garniture de frein pour freins à disque, en particulier pour trains à grande vitesse, avec une plaque de support (10) en une ou plusieurs parties avec une fixation ou un guidage (12) situé à l'arrière pour la garniture de frein et une tôle de retenue (30) maintenue sur la face avant de la plaque de support (10) à un certain écart de celle-ci au moyen d'un écarteur (11) et de moyens de fixation (20) avec un certain nombre de premières découpures (31) pour le logement de différents éléments de freinage (40), parmi lesquels chaque élément de freinage individuel est composé d'un corps moulé en matériau de frottement et d'une cage métallique (41) ouverte sur le haut, qui entoure le corps moulé en matériau de frottement en forme d'enveloppe, cage dont la plaque de fond (42) fait saillie latéralement par rapport à la paroi de la cage (43) et présente un diamètre qui est supérieur au diamètre de chaque première découpure (31), chaque cage (41) d'élément de freinage traversant la première découpure (31) de la tôle de retenue (30) de telle manière que la zone périphérique extérieure (42a) de la plaque de fond de la cage (42) vient s'appuyer sur la surface de paroi (30a) de la tôle de retenue (30) qui est tournée vers la plaque de support (10), la cage (41) de l'élément de freinage étant maintenue en position d'appui au moyen d'un ressort à disques (45) qui s'appuie sur la plaque de support (10), caractérisée en ce que chaque moyen de fixation (20) est constitué par un tourillon ou un boulon (50) fixé sur la face de paroi (10a) de la plaque de support (10) qui est tournée vers la tôle de retenue (30) et qui passe par une seconde découpure (131) configurée dans la tôle de retenue (30), tourillon dont la section (50a) qui fait saillie de la tôle de retenue (30) est verrouillée au moyen d'un jonc ou d'un jonc fendu et élastique comme dispositif de verrouillage, le jonc ou le jonc fendu et élastique étant placé au-dessus de la tôle de retenue (30) de telle manière que la tôle de retenue (30) est maintenue sur la plaque de support (10) par les ressorts à disques (45) qui s'appuient à une extrémité sur la plaque de support (10) et les cages d'éléments de freinage (41) et sur l'appui ainsi relié de la tôle de retenue (30) sur le boulon ou la goupille fendue de verrouillage (55) par ajustement pressé.

3. Garniture de frein selon la revendication 1, caractérisée en ce que le tourillon ou boulon (50) porte, à son extrémité supérieure (50a), qui présente la forure (51) pour le boulon ou la goupille fendue de verrouillage (55), au-dessous de la forure (51) un anneau (56) qui fait saillie latéralement de la face de paroi (50a) et qui est relié de manière fixe au tourillon ou au boulon (50), qui est placé à un certain écart de la forure (51) qui correspond à l'épaisseur de la tôle de retenue (30).

4. Garniture de frein selon la revendication 1, caractérisée en ce que le tourillon ou boulon (50) est rentré à la manière d'un col à son extrémité supérieure (50a) qui présente la forure (51) pour le boulon ou la goupille fendue de verrouillage (55) en formant une surface d'appui (50d) annulaire périphérique au-dessous de la forure (51), surface d'appui qui est placée à un certain écart de la forure (51) qui correspond à l'épaisseur de la tôle de retenue (30).

5. Garniture de frein selon l'une des revendications 1 à 3, caractérisée en ce que le tourillon ou boulon (50) est mis en place avec son extrémité (50b) tournée vers la plaque de support (10) dans une forure (16) configurée dans la plaque de support (10) et est relié de manière fixe à la plaque de suport (10) au moyen d'une soudure (17).

6. Garniture de frein selon l'une des revendications 1 à 5, caractérisée en ce qu'un anneau d'écartement ou une douille d'écartement (15), qui maintient l'écartement entre la tôle de retenue (30) et la plaque de support (10), est enfilé sur le tourillon ou boulon (50).
